# EUROPÄISCHE PATENTSCHRIFT

(11) **EP 0 796 423 B1**
(45) Veröffentlichungstag und Bekanntmachung des Hinweises auf die Patenterteilung: **16.04.2003**
(21) Anmeldenummer: 95941674.4
(22) Anmeldetag: 05.12.1995
(51) Int. Cl.: G01G 11/08

(54) **VERFAHREN UND VORRICHTUNG ZUR KONTINUIERLICHEN, GRAVIMETRISCHEN DOSIERUNG UND MASSENSTROMBESTIMMUNG VON FLIESSFÄHIGEN GÜTERN**
PROCESS AND DEVICE FOR THE CONTINUAL GRAVIMETRIC METERED DISPENSING AND MASS FLOW RATE DETERMINATION OF FREE-FLOWING MATERIALS
PROCEDE ET DISPOSITIF PERMETTANT UN DOSAGE GRAVIMETRIQUE CONTINU ET UNE DETERMINATION DU DEBIT MASSIQUE DE MATIERES COULANTES

(30) Priorität: 05.12.1994 DE 4443053
(43) Veröffentlichungstag der Anmeldung: 24.09.1997
(73) Patentinhaber: Pfister GmbH, 86165 Augsburg (DE)
(72) Erfinder: HÄFNER, Hans, Wilhelm, D-86551 Aichach-Walchshofen (DE)
(74) Vertreter: Fiener, Josef
(86) Internationale Anmeldenummer: EP9504786
(87) Internationale Veröffentlichungsnummer: WO96018088

(56) Entgegenhaltungen:
- EP-A- 0 262 335
- EP-A- 0 537 765
- DE-B- 1 211 415
- WAGEN UND DOSIEREN, Bd. 23, Nr. 5, September 1992 MAINZ DE, Seiten 14-23, XP 000325382 HARALD HEINRICI 'Messen und Dosieren von Schüttgutmassenströmen - ein erfolgsentscheidender Verfahrensschritt'
- PATENT ABSTRACTS OF JAPAN vol. 6 no. 152 (P-134) [1030] ,21.August 1982 & JP,A,57 072016 (KUBOTA TEKKO K.K.) 6.Mai 1982,

## Beschreibung

Die Erfindung betrifft ein Verfahren und eine Vorrichtung zur kontinuierlichen, gravimetrischen Dosierung und Massenstrombestimmung von fließfähigen Gütern mit einem Durchflußmeßgerät, insbesondere einem Coriolis-Meßrad zur Feststellung des momentanen Massenstroms und einer dem Durchflußmeßgerät nachgeschalteten Dosiereinrichtung.

Eine derartige Anlage zum kontinuierlichen, gravimetrischen Fördern und/oder Mischen von Schüttgütern ist aus der DE 40 23 948 A1 bekannt, wobei eine Dosierrotorwaage gemäß der DE 32 17 406 A1 bzw. der EP-A-0 198 956 Verwendung findet. Dieser einer Schüttgutzuführung folgenden Dosiervorrichtung ist in einem geschlossenem pneumatischen Förderweg eine auf Kraftmeßzellen abgestützte Sammelvorrichtung mit einer Zellenradschleuse nachgeschaltet. Hierdurch läßt sich die darin befindliche Schüttgutmasse kontinuierlich feststellen und entweder die Drehzahl der Zellenradschleuse oder die Gesamtluftstrommenge des Fördergebläses beeinflussen, so daß der Schüttgutdurchsatz durch Variieren der zugeführten Luftmenge pro Zeiteinheit beeinflußt werden kann. Zur entsprechenden Regelung des gewünschten Mischungsverhältnisses oder der gewünschten Fördermenge pro Zeiteinheit (Förderstärke) wird hierbei ein rechnergesteuertes, zentrales Dosiersteuersystem verwendet, wie es beispielsweise in der DE 32 17 406 A1 beschrieben ist, wobei das Wägesignal der Bunker-Wägezellen als Eingangssignal dient und insbesondere die Drehzahl des Dosierrotors und gegebenenfalls der Zellenradschleuse für die Schüttgutzufuhr geregelt wird. Bis zur Einregelung auf die Soll-Förderstärke kann sich hierbei jedoch eine gewisse Regelungs-Totzeit ergeben.

Dieses Regelungssystem wird in der vorstehend genannten EP-A-0 198 956 näher beschrieben, wobei in der Dosierrotorwaage die momentan in der Rotorwägestrecke wirkende Schüttgutmasse erfaßt wird, aus der sich durch Multiplikation mit der Winkelgeschwindigkeit des Dosierrotors der Schüttgut-Massendurchsatz ergibt. Die Wägeelektronik speichert hierbei die momentan auf der Rotorwägestrecke (Meßstrecke) befindliche Schüttgutmasse, so daß kurz vor dem Austrag des Schüttgutes in die pneumatische Förderleitung entsprechend der vorbestimmten Soll-Förderstärke die Rotorwinkelgeschwindigkeit variiert werden kann, also der Dosierrotor beschleunigt oder verzögert wird. Hierdurch ergibt sich eine relativ hohe Dosiergenauigkeit, die sich für die Dosierung von staubförmigen Schüttgütern, beispielsweise bei der Kohlenstaubdosierung von Zementdrehrohröfen oder zur Dosierung von Additiven bei der Rauchgasreinigung sehr gut eignet.

Bei bestimmten Fördergütern, wie Additive zur Zumischung bei der Rauchgasreinigung von Kraftwerken, Verbrennungsanlagen und ähnlichen ist jedoch zu beachten, daß diese Schüttgüter abhängig vom Feuchtegrad, Fluidisierung, Feinheit und dergleichen zum "Schießen" oder auch zur Brückenbildung neigen können, so daß es bei der Schüttgutzufuhr zu zufälligen oder stark pulsierenden Massestromschwankungen kommen kann. In diesem Fall kann die vorher beschriebene Dosiervorrichtung die kurzzeitigen Massestromschwankungen kaum mehr ausgleichen, da der Dosierrotor insbesondere bei der druckstoßfesten Ausführung eine erhebliche Eigenmasse von einigen hundert Kilogramm besitzt, so daß zur Konstanthaltung der Förderstärke bei stark schwankenden Massenströmen die erforderlichen Winkelgeschwindigkeitsänderungen, also eine starke Beschleunigung oder eine Verzögerung des Dosierrotors aufgrund der Massenträgheit kaum mehr möglich ist.

Diese Plus-/Minus-Schwankungen können in der erstgenannten Anlage zum Fördern und/oder Mischen von Schüttgütern in Art einer Mittelwertbildung teilweise noch dadurch ausgeglichen werden, daß ein auf Kraftmeßzellen abgestützter Sammelbehälter vorgesehen ist. Ein solcher Ausgleichsbehälter erhöht jedoch den Bauaufwand und Platzbedarf erheblich. Der Austrag durch die Abgabevorrichtung in Form einer Zellenradschleuse ist zudem aufgrund des volumetrischen Meßprinzipes in den Taschen der Zellradschleuse relativ ungenau.

In der DE-PS 1 211 415 wird ein Coriolis-Meßrad beschrieben, dem eine Förderschnecke nachgeschaltet ist, die von einem Motor angetrieben ist, dessen Drehzahl über einen Impulsgeber festgestellt wird. Die Drehzahl des Antriebsmotors der Förderschnecke dient hierbei nur als Führungsgröße, wobei ein elektronisches Schaltgerät entsprechend der Führungsdrehzahl der Förderschnecke eine vorgeschaltete Schüttelrinne über dem Coriolis-Meßrad ansteuert. Kurzzeitige Schwankungen des Massenstroms lassen sich somit ebenfalls nicht kompensieren.

Die US-A-4,805,462 beschreibt ebenfalls ein Verfahren und eine Vorrichtung zur Massenstrombestimmung, wobei ein Meßrad vorgesehen ist, auf dem das Schüttgut entlang einem Halbkreis geführt wird. Hierbei wird mittels einer an Blattfedern gelagerten Nabe die Zentrifugalkraft an einer seitlich angeordneten Wägezelle gemessen. Das Meßrad braucht hierbei aufgrund des Zentrifugal-Meßprinzipes einen erhöhten Rand. Dadurch gestaltet sich die Entleerung des Meßrades schwierig. Zudem wird hierin ein reines Meßgerät beschrieben, jedoch keine nachgeschaltete Dosiereinrichtung, da die vom Meßergebnis abhängige Nachregelung an einem vorgeschalteten Flügelrad erfolgt.

Die DE-A-36 33 694 ist darauf gerichtet, daß bei einem Coriolis-Meßrad das Drehmoment und die Drehzahl gleichzeitig gemessen werden und hieraus die Förderstärke ermittelt wird. Somit ist ebenfalls keine nachgeschaltete Dosiervorrichtung zur Erhöhung der Dosiergenauigkeit vorhanden.

Gemäß der DE-A-35 36 347 ist eine Durchlaufwaage in Form einer Rohrwaage vorgesehen, wobei die zugeordneten Wägezellen das Wägesignal liefern, das nach Vergleich mit der Soll-Förderstärke einen Regelschieber ansteuert. Hierbei ist jedoch aufgrund der zeitgleich in das Wägegefäß zulaufenden Schüttgutmenge und damit stoßartigen Belastungen der Wägezellen nur eine grobe Regelung möglich. Zudem besteht hierbei insbesondere bei weitgehend geschlossenem Regelschieber und anschließender Öffnung, wie dies bei stark schwankender Zufuhr erforderlich ist, die Gefahr von Brückenbildung des Schüttgutes und damit völlig unzureichender Dosierung.

Demzufolge liegt der Erfindung die Aufgabe zugrunde, ein Verfahren und eine Vorrichtung zur kontinuierlichen, gravimetrischen Dosierung und Massenstrombestimmung, insbesondere von Schüttgütern zu schaffen, mit dem bzw. mit der auf einfache Weise eine verbesserte Dosiergenauigkeit selbst bei stark schwankender Fördergutzufuhr erreicht wird.

Diese Aufgabe wird gelöst durch ein Verfahren gemäß den Merkmalen des Patentanspruches 1 bzw. durch eine Vorrichtung gemäß den Merkmalen des Patentanspruches 5.

Durch die zeitversetzte Regulierung der nachgeschalteten Dosiereinrichtung und damit des Austrages zur Regelung der Förderstärke in direkter Abhängigkeit von dem am Durchflußmeßgerät festgestellten momentanen Massenstrom ergibt sich eine hochgenaue Störgrößenkompensation noch vor Übergabe des Schüttgutes an die Verbrauchsstelle oder Prozeßanlage, so daß eine besonders hohe Kurzzeitdosiergenauigkeit erreicht wird. Dabei wird eine Regelung der Ist-Förderstärke auf den eingestellten Sollwert ohne Totzeit durchgeführt, da genau erfaßt wird, wann die Massenabweichung an der Abgabestelle auftritt und dementsprechend durch zeitversetzte Erhöhung oder Reduzierung der Fördergeschwindigkeit ausgeglichen werden kann. Dies ist insbesondere bei der Kohlenstaubdosierung zur Erreichung eines konstanten Verbrennungsprozesses oder bei der Rauchgasreinigung von Bedeutung. Diese Störgrößenkompensation aufgrund zufälliger oder pulsierender Massestromschwankungen bei der Dosierung noch vor Übergabe des Fördergutes in den chemischen oder thermischen Prozeß ermöglicht somit eine besonders hohe Kurzzeit-Dosiergenauigkeit in Art einer vorausschauenden Regelung, wobei insbesondere die Verwendung eines Coriolis-Meßrades eine hochgenaue Massenstrombestimmung über einen breiten Einstellbereich der Soll-Förderstärke erlaubt.

Bevorzugte Ausführungsformen sind Gegenstand der Unteransprüche.

Nachfolgend werden mehrere Ausführungsbeispiele anhand der Zeichnungen näher erläutert und beschrieben. Hierbei zeigen:
- Fig. 1: eine Längsschnittdarstellung durch eine Vorrichtung zur kontinuierlichen gravimetrischen Schüttgutdosierung und Massenstrombestimmung mit einem Durchflußmeßgerät gemäß dem Coriolis-Prinzip;
- Fig. 2: eine Seitenansicht gemäß Fig. 1; und
- Fig. 3: eine schematische, abgewandelte Ausführungsform der Vorrichtung gemäß Fig. 1 und Fig. 2 mit mehreren Gebläsen zur Änderung der Luftmenge bei der Förderung und Dosierung.

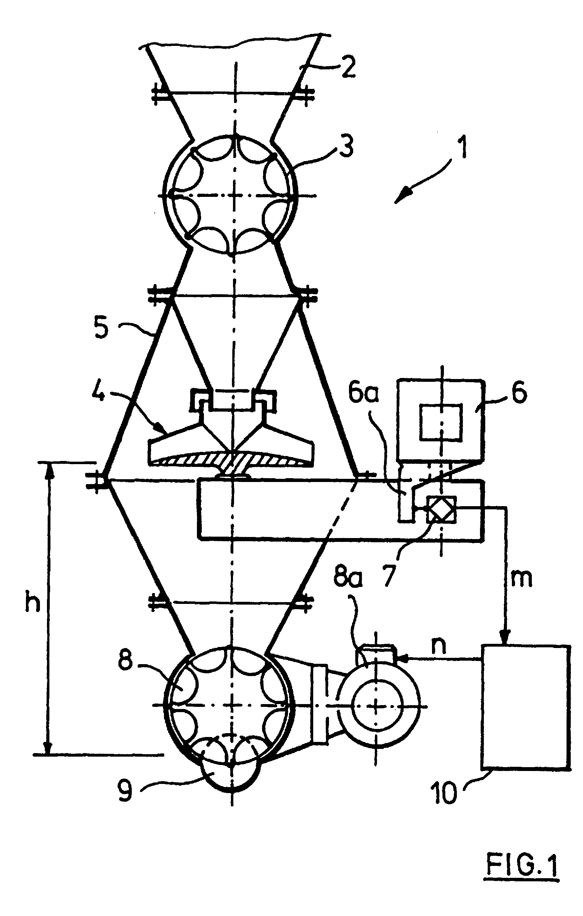

In Fig. 1 ist eine Vorrichtung 1 zur kontinuierlichen gravimetrischen Dosierung und Massenstrombestimmung dargestellt, wobei das entsprechend einer einstellbaren Soll-Förderstärke zu dosierende Fördergut, insbesondere ein rieselfähiges Schüttgut, aus einem Bunker oder Silo 2 mittels einer hier als Zellenradschleuse ausgebildeten Aufgabe- bzw. Abzugsvorrichtung 3 zugeführt wird. Das Fördergut gelangt hierbei auf ein Durchflußmeßgerät 4, das innerhalb eines Gehäuses 5 angeordnet ist und damit eine Meßstrecke definiert. Das Durchflußmeßgerät 4 ist hierbei bevorzugt als Coriolis-Meßrad ausgebildet, wie dies näher in der DE 41 34 319 A1 beschrieben ist. Dieses Coriolis-Meßrad ist hierbei an einem seitlich aus dem Gehäuse 5 herausgeführten Antriebsgehäuse gelagert und durch einen Elektromotor 6 angetrieben, der sich begrenzt schwenkbeweglich über einen Kragarm 6a auf eine Kraftmeßzelle 7 abstützt. Das erforderliche Drehmoment des sich mit etwa konstanter Drehzahl drehenden Meßrades ändert sich hierbei entsprechend der auftretenden Corioliskraft, wobei die Änderung des Antriebsdrehmomentes und damit das Reaktionsmoment auf die seitlich angeordnete Kraftmeßzelle 7 direkt proportional zu der Masse des durchströmenden Materialstromes ist.

Zur Erfassung der Drehmomentänderung und damit der Massenstrombestimmung kann jedoch auch die Leistungsaufnahme des Antriebsmotors 6 herangezogen werden. Das Durchflußmeßgerät 4 gemäß dem Coriolis-Meßprinzip hat hierbei den Vorteil einer sehr hohen Meßgenauigkeit, so daß diese Form des Durchflußmeßgerätes 4 bevorzugt ist. Es können jedoch auch andere Durchflußmeßgeräte wie Prallplatten-Durchlaufwaagen oder induktive bzw. kapazitive Durchflußmeßgeräte Verwendung finden.

Am unteren Ende des Gehäuses 5 ist eine Dosiereinrichtung 8 wiederum in Form einer Zellenradschleuse vorgesehen, die von einem Motor 8a mit regelbarer Drehzahl angetrieben ist und in eine Ausblasleitung 9 mündet. Wesentlich ist hierbei, daß der Meßwertaufnehmer des Durchflußmeßgerätes 4, also hier die Kraftmeßzelle 7 mit einer Dosiersteuerung 10 verbunden ist, die somit den momentanen Massenstrom feststellt und in Beziehung zur Soll-Förderstärke setzt, sowie in direkter Folge den Motor 8a der Dosiereinrichtung 8 ansteuert, um dessen Drehzahl bzw. Winkelgeschwindigkeit zu variieren und damit die eingestellte Förderstärke konstant zu halten. Wird somit von dem Durchflußmeßgerät 4 eine Minusabweichung des Massenstroms gemessen (z. B. -0,2 %), so wird zur Konstanterhaltung der Förderstärke die Winkelgeschwindigkeit der Dosiereinrichtung 8 um den entsprechenden Wert angehoben, also hier um +0.2 %. Von wesentlicher Bedeutung ist hierbei, daß durch die Anordnung der Dosiereinrichtung 8 in einem bestimmten Abstand (hier der sich aus der freien Fallhöhe und dem halben Umfangsweg zusammensetzenden Höhe h) von dem Durchlaufmeßgerät 4 geometrisch vorgegebene Bedingungen vorhanden sind, so daß von der Dosiersteuerung 10 genau berechnet werden kann, zu welchem Zeitpunkt (Zeitversatz) die Störgröße (z. B. die Abweichung von -0,2 %) an der Ausblasleitung 9 auftritt. Abhängig von der ebenfalls gemessenen Winkelgeschwindigkeit der Dosiereinrichtung 8 (z. B. einen Tachogenerator am Motor 8a) läßt sich unter Berücksichtigung der Fallhöhe h von dem Durchflußmeßgerät 4 auf die entsprechende Tasche der hier als Dosiereinrichtung 8 dienenden Zellenradschleuse und der Umdrehung um 180° (halber Umfangsweg) eine genaue Zeitspanne von beispielsweise 5 Sekunden bestimmen, nach der die Störgröße (Minusabweichung) nach Feststellung an dem Durchflußmeßgerät 4 (mittels der Kraftmeßzelle 7) dann an der Abgabestelle, d. h. der Einmündung in die Ausblasleitung 9 auftritt. Somit kann die Dosiersteuerung 10 zu diesem Zeitpunkt den entsprechenden Befehl bzw. unter Berücksichtigung des Trägheitsverhaltens der Dosiereinrichtung 8 kurz vorher geben, die Drehzahl um z. B. 0,2 % zu erhöhen. Somit ist durch diese Vorrichtung 1 eine vorausschauende Regelung der Ist-Förderstärke ohne Totzeit möglich.

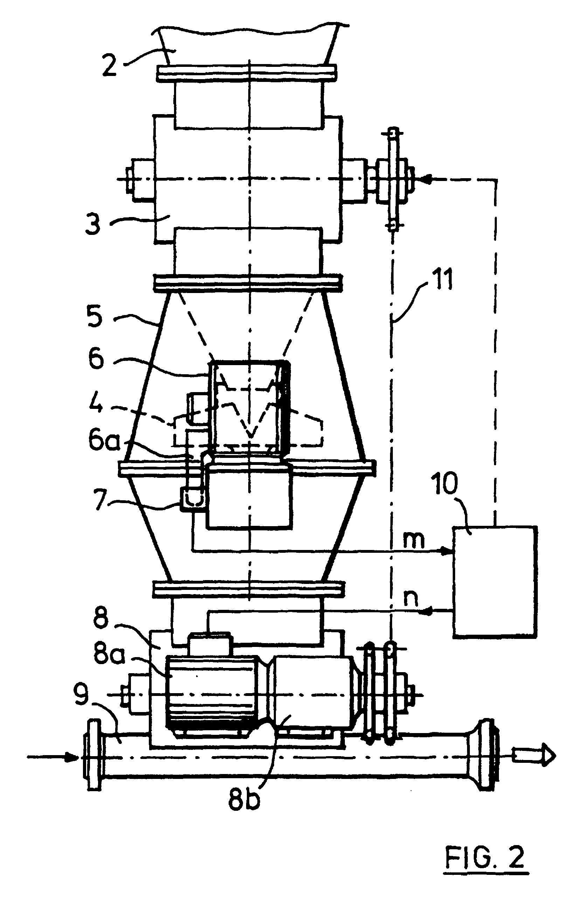

In Fig. 2 ist eine Seitenansicht auf die Vorrichtung 1 gemäß Fig. 1 dargestellt, wobei insbesondere die seitliche Anordnung des Antriebsmotors 6 für das Durchflußmeßgerät 4 und der Motor 8a für die Dosiereinrichtung 8 ersichtlich ist, ebenso die Anordnung der Ausblasleitung 9. Es sei darauf hingewiesen, daß anstatt der Zellenradschleuse auch Dosierschnecken oder ähnliche Dosierorgane als Dosiereinrichtung 8 Verwendung finden können, wobei die Nachregelung insbesondere über die Drehzahlveränderung der Dosiereinrichtung 8 erfolgt. In vorteilhafter Ausgestaltung kann hierbei zur weitgehenden Konstanthaltung des dem Durchflußmeßgerät 4 zugeführten Massenstroms auch die Aufgabe- bzw. Abzugsvorrichtung 3 gemäß den Meßergebnissen des Durchflußmeßgerätes 4 gesteuert oder geregelt werden. In besonders einfacher Ausführung genügt es jedoch einen Antrieb 11 von dem Motor 8a und einem zugeordneten Getriebe 8b der Dosiereinrichtung 8 abzuzweigen, um hier eine synchrone Regelung der oberen und unteren Zellenradschleuse zu erreichen. Ebenso können natürlich getrennte Motoren vorgesehen sein, die von der Dosiersteuerung 10 in elektronisch gekoppelter Weise angesteuert werden.

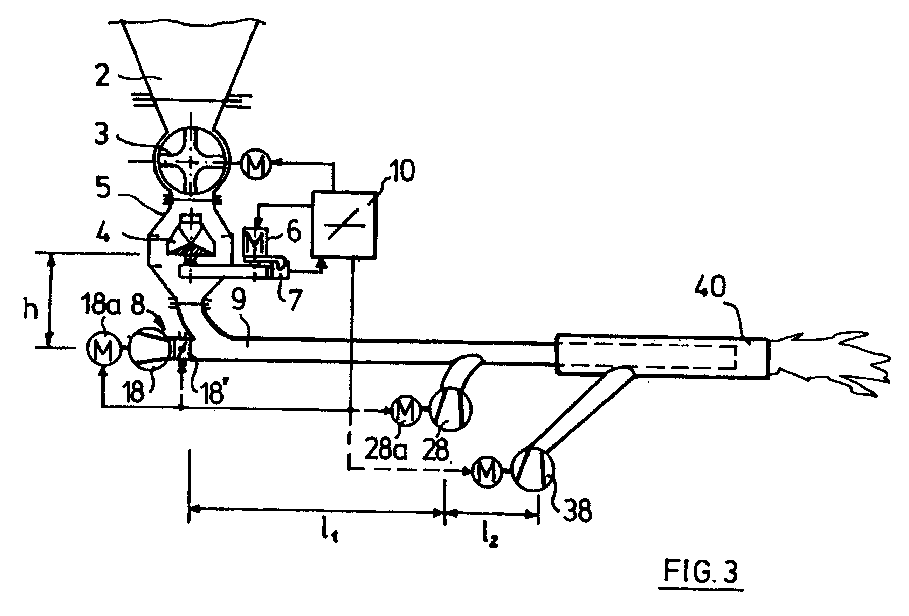

In Fig. 3 ist eine abgewandelte Ausführungsform der Einrichtung zur kontinuierlichen gravimetrischen Dosierung und Massenstrombestimmung dargestellt, wobei bei ansonsten ähnlichem Aufbau wie in Fig. 1 und Fig. 2 als Dosiereinrichtung 8 ein Fördergebläse 18 zur Dosierung und Weiterförderung vorgesehen ist. Der Antriebsmotor 18a des Fördergebläses 18 ist hierbei ebenfalls wieder mit der Dosiersteuerung 10 verbunden, so daß unter Zugrundelegung der Förderstrecke (Fallhöhe h) von dem Durchflußmeßgerät 4 bis zur Einmündung in Blasleitung 9 der Motor 18a angesteuert werden kann, um zum entsprechenden Zeitpunkt (Auftreten der Massenstrom-Abweichung) die Förderstärke konstant zu halten, indem z. B. die Drehzahl des Fördergebläses 18 kurzzeitig erhöht wird.

Eine weitere Möglichkeit zur Regelung besteht darin, daß am Fördergebläse 18 eine Dosierklappe 18' vorgesehen ist, die den Luftstrom verändert und somit die Austragsleistung aus dem Gehäuse 5 in Abhängigkeit von dem durch das Durchflußmeßgerät 4 festgestellten momentanen Massenstrom steuert. Je nach Plusoder Minusabweichung kann somit die Lufteinblasung durch das Fördergebläse 18 in Folge der Drehzahlregulierung des Antriebsmotors 18a und/oder Klappenöffnung oder Schließung der Dosierklappe 18' variiert werden, um die Soll-Förderstärke einzuhalten.

Eine weitere Möglichkeit besteht darin, daß ein Zusatzgebläse 28 an der Ausblasleitung 9 angeschlossen ist, wobei wiederum der Antriebsmotor 28a des Zusatzgebläses 28 an die Dosiersteuerung 10 angeschlossen ist, wie dies von einem Datenverknüpfungspunkt ausgehend in Strichlinien dargestellt ist. Auch hier sind feste geometrische Parameter vorhanden, nämlich der sich aus der Fallhöhe h und der horizontalen Förderstrecke 11 zusammengesetzte Abstand von dem Durchflußmeßgerät 4 zu der Einmündung des Zusatzgebläses 28, so daß bei einer vorgegebenen Luftgeschwindigkeit genaue Aussagen getroffen werden können, wann die von dem Durchflußmeßgerät 4 festgestellte Massenabweichung an dem Zusatzgebläse 28 auftrifft und somit eine entsprechende Nachregulierung durch Erhöhung bzw.

Reduzierung der Fördergeschwindigkeit zeitgerecht vorgenommen werden kann. Anstatt der Veränderung von Sekundärluftmenge und/oder Luftgeschwindigkeit kann als weitere Alternative ein Primärluftgebläse 38 nachgeregelt werden, wobei wiederum feste Abstände, nämlich hier h + 11 + 12, und damit Zeitunterschiede zwischen Durchlaufmeßgerät 4 und Einmündung der Primärluftleitung des Primärluftgebläses 38 vorgegeben sind, so daß eine entsprechende Verzögerung oder Beschleunigung des Massenstromes durch Änderung der Luftmenge oder Luftgeschwindigkeit vorgenommen werden kann. Die Änderung der Primärluftzufuhr ist hierbei insbesondere bei Feuerungsanlagen 40 zur Konstanthaltung des Luft-/Brennstoffverhältnisses wesentlich. So sind auch bevorzugt die drei dargestellten Gebläse 18, 28 und 38 untereinander in einem z. B. in der Dosiersteuerung 10 integrierten Regler gekoppelt, so daß bei einer Erhöhung der Luftmenge bei dem Gebläse 18 eine entsprechende Reduzierung der zugeführten Luftmenge an dem Gebläse 38 vorgenommen wird, um somit nicht nur die zugeführte Brennstoffmenge, sondern auch das Luft-/Brennstoffverhältnis entsprechend den Sollwerten einzuhalten.

## Patentansprüche

1. Verfahren zur kontinuierlichen, gravimetrischen Dosierung und Massenstrombestimmung von fließfähigen Gütern mit einem Durchflußmeßgerät (4), insbesondere einem Coriolis-Meßrad, zur Feststellung des momentanen Massenstroms und einer vorgeschalteten, einstellbaren Aufgabe einrichtung (3) sowie einer dem Durchflußmeßgerät (4) nachgeschalteten Dosiereinrichtung (8),
**dadurch gekennzeichnet, daß**
der Austrag der Dosiereinrichtung (8) in Anpassung an die Soll-Förderstärke abhängig von dem am Durchflußmeßgerät (4) festgestellten, momentanen Massenstrom zeitversetzt nachgeregelt wird.

2. Verfahren nach Anspruch 1,
**dadurch gekennzeichnet, daß**
die Austragsregelung an der Dosiereinrichtung (8) unter Berücksichtigung des Abstandes (Fallhöhe h; horizontale Förderlänge l₁, l₂) zwischen dem Durchflußmeßgerät (4) und der Dosiereinrichtung (8, 18, 28, 38) erfolgt.

3. Verfahren nach Anspruch 1 oder 2,
**dadurch gekennzeichnet, daß**
die Austragsregelung der Dosiereinrichtung (8) durch Änderung der Drehzahl der Dosiereinrichtung (8) erfolgt.

4. Verfahren nach Anspruch 1 oder 2,
**dadurch gekennzeichnet, daß**
die Austragsregelung der Dosiereinrichtung (8) bei pneumatischer Förderung durch Veränderung der Luftmenge und/oder Luftgeschwindigkeit erfolgt.

5. Vorrichtung zur kontinuierlichen, gravimetrischen Dosierung und Massenstrombestimmung von fließfähigen Gütern mit einem Durchflußmeßgerät (4), insbesondere einem Coriolis-Meßrad, zur Feststellung des momentanen Massenstroms und einer vorgeschalteten, einstellbaren Aufgabe einrichtung (3) sowie einer dem Durchflußmeßgerät (4) nachgeschalteten Dosiereinrichtung (8), die mit dem Durchflußmeßgerät (4) über eine Dosiersteuerung (10) verbunden ist,
**dadurch gekennzeichnet, daß**
der Austrag der Dosiereinrichtung (8) in Abhängigkeit von Massenstrom-Abweichungen am Durchflußmeßgerät (4) zeitversetzt nachregelbar ist.

6. Vorrichtung nach Anspruch 5,
**dadurch gekennzeichnet, daß**
die Dosiereinrichtung (8) über einen Antrieb (11) mit der Aufgabeeinrichtung (3) vor dem Durchflußmeßgerät (4) zum synchronen Betrieb verbunden ist.

7. Vorrichtung nach Anspruch 6,
**dadurch gekennzeichnet, daß**
der Antrieb (11) durch einen Kettenantrieb gebildet ist.

8. Vorrichtung nach Anspruch 6,
**dadurch gekennzeichnet, daß**
der Antrieb (11) zwischen dem Antriebsmotor (8a) der Dosiereinrichtung (8) und der Aufgabeeinrichtung (3) elektronisch gekoppelt ist.

9. Vorrichtung nach einem der Ansprüche 5 bis 8,
**dadurch gekennzeichnet, daß**
die Dosiereinrichtung (8) durch ein Fördergebläse (18, 28, 38) gebildet ist, dessen Antriebsmotor (18a, 28a) mit der Dosiersteuerung (10) verbunden ist.

10. Vorrichtung nach einem der Ansprüche 5 bis 9,
**dadurch gekennzeichnet, daß**
die Dosiereinrichtung (8) eine Luftstrom-Dosierklappe (18') enthält.

## Claims

1. A method of continuous, gravimetric metering and mass flow determination of flowable materials with a flowmeter (4), especially a Coriolis measuring wheel, for determining the instantaneous mass flow, and an upstream adjustable charging device (3) as well as a metering device (8) downstream of the flowmeter (4),
**characterized in that**
the output of the metering device (8) is regulated to match the set-point flow rate with a time offset in dependence on the instantaneous mass flow determined by the flowmeter (4).

2. A method according to claim 1, **characterized in that** the output regulation at the metering device (8) is effected taking into account the distance (height of fall h; horizontal feed length I₁, I₂) between the flowmeter (4) and the metering device (8, 18, 28, 38).

3. A method according to claim 1 or 2, **characterized in that** the output regulation of the metering device (8) is effected by altering the speed of rotation of the metering device (8).

4. A method according to claim 1 or 2, **characterized in that** the output regulation of the metering device (8) is effected with a pneumatic feed by altering the amount of air and/or the air velocity.

5. Apparatus for continuous, gravimetric metering and mass flow determination of flowable materials with a flowmeter (4), especially a Coriolis measuring wheel, for determining the instantaneous mass flow, and an upstream adjustable charging device (3) as well as a metering device (8) which is downstream of the flowmeter (4) and is connected to the flowmeter (4) through a metering controller (10),
**characterized in that**
the output of the metering device (8) can be regulated with a time offset in dependence on the deviations in mass flow at the flowmeter (4).

6. Apparatus according to claim 5, **characterized in that** the metering device (8) is connected through a drive (11) to the charging device (3) ahead of the flowmeter (4) for synchronous operation.

7. Apparatus according to claim 6, **characterized in that** the drive (11) is in the form of a chain drive.

8. Apparatus according to claim 6, **characterized in that** the drive (11) is electronically coupled between the drive motor (8a) of the metering device (8) and the charging device (3).

9. Apparatus according to any of claims 5 to 8, **characterized in that** the metering device (8) is in the form of a feed blower (18, 28, 38), whose drive motor (18a, 28a) is connected to the metering controller (10).

10. Apparatus according to any of claims 5 to 9, **characterized in that** the metering device (8) includes an airstream metering flap (18').

## Revendications

1. Procédé permettant d'effectuer en continu un dosage gravimétrique et une détermination du débit massique de matières coulantes à l'aide d'un débitmètre (4), notamment d'un débitmètre à effet Coriolis, pour déterminer le flux massique instantané, d'un dispositif de chargement réglable (3) monté en amont et d'un dispositif de dosage (8) monté en aval du débitmètre (4), **caractérisé en ce que**, pour faire correspondre la quantité délivrée par le dispositif de dosage (8) au débit théorique, ladite quantité est ajustée avec un décalage dans le temps en fonction du flux massique instantané relevé au niveau du débitmètre (4).

2. Procédé selon la revendication 1, **caractérisé en ce que** l'ajustement de la quantité délivrée par le dispositif de dosage (8) s'effectue en tenant compte de l'écart (hauteur de chute h ; distance de transport horizontale l₁, l₂) entre le débitmètre (4) et le dispositif de dosage (8, 18, 28, 38).

3. Procédé selon la revendication 1 ou 2, **caractérisé en ce que** l'ajustement de la quantité délivrée par le dispositif de dosage (8) s'effectue en modifiant la vitesse de rotation du dispositif de dosage (8).

4. Procédé selon la revendication 1 ou 2, **caractérisée en ce qu'**en cas de transport pneumatique, l'ajustement de la quantité délivrée par le dispositif de dosage (8) s'effectue en modifiant la quantité d'air et/ou la vitesse de circulation de l'air.

5. Dispositif permettant de procéder en continu au dosage gravimétrique continu et à la détermination du débit massique de matières coulantes à l'aide d'un débitmètre (4), notamment un débitmètre à effet Coriolis, pour déterminer le flux massique instantané, d'un dispositif de chargement réglable (3) monté en amont et d'un dispositif de dosage (8) monté en aval du débitmètre (4) et relié au débitmètre (4) par l'intermédiaire d'une commande de dosage (10), **caractérisé en ce que** la quantité délivrée par le dispositif de dosage (8) peut être ajustée avec un décalage dans le temps en fonction des variations du flux massique relevées au niveau du débitmètre (4).

6. Dispositif selon la revendication 5, **caractérisé en ce que** le dispositif de dosage (8) est relié par un entraînement (11) au dispositif de chargement (3) situé en amont du débitmètre (4) pour le faire fonctionner de façon synchrone.

7. Dispositif selon la revendication 6, **caractérisé en ce que** l'entraînement (11) est constitué par un entraînement par chaîne.

8. Dispositif selon la revendication 6, **caractérisé en ce que** l'entraînement (11) est couplé électroniquement entre le moteur d'entraînement (8a) du dispositif de dosage (8) et le dispositif de chargement (3).

9. Dispositif selon l'une des revendications 5 à 8, **caractérisé en ce que** le dispositif de dosage (8) est constitué par une soufflante de transport (18, 28, 38) dont le moteur d'entraînement (18a, 28a) est relié à la commande de dosage (10).

10. Dispositif selon l'une des revendications 5 à 9, **caractérisé en ce que** le dispositif de dosage (8) contient un clapet de dosage (18') actionné par le flux d'air.
